# EUROPEAN PATENT SPECIFICATION

(11) **EP 1 916 797 B1**
(45) Date of publication and mention of the grant of the patent: **24.06.2009**
(21) Application number: 06761581.5
(22) Date of filing: 26.07.2006
(51) Int. Cl.: H04L 9/06

(54) **AUTHENTICATION AUTHORIZATION ACCOUNTING PROTOCOL MESSAGE TRANSMITTING METHOD**
AUTHENTIFIKATIONS-AUTORISIERUNGS-BUCHFÜHRUNGS-PROTOKOLLNACHRICHTEN-ÜBERTRAGUNGSVERFAHREN
PROCEDE DE TRANSMISSION DE MESSAGE DE PROTOCOLE D'AUTHENTIFICATION D'AUTORISATION ET DE COMPTABILITE

(30) Priority: 29.07.2005 CN 200510085710
(43) Date of publication of application: 30.04.2008
(73) Proprietor: Huawei Technologies Co., Ltd., Longgang District, Shenzhen Guangdong 518129 (CN)
(72) Inventor: ZHANG, Tao, Shenzhen, Guangdong 518129 (CN)
(74) Representative: Collin, Jérôme
(86) International application number: PCT/CN2006/001854
(87) International publication number: WO 2007/012275

(56) References cited:
- EP-A- 1 411 699
- WO-A-01/55904
- US-A- 5 535 199
- US-A1- 2004 148 504
- US-B1- 6 542 992
- ZHU HAILONG ET AL.: 'AAA technology based on DIAMETER and Its Application in Mobile IP' COMPUTER ENGINEERING AND APPLICATION no. 21, 2003, pages 159 - 163, XP008076306

## Description

### Field of the Invention

The present invention relates to the field of network communication technologies, and in particular to a method for transmitting a message of Authentication, Authorization and Accounting protocol.

### Background of the Invention

The family of DIAMETER protocols is a new generation of Authentication, Authorization and Accounting (AAA) protocol standard, and is gaining increasing attention due to their powerful expandability and security guarantee. In international organization for standardization, such as the International Telecommunication Union (ITU), the 3rd Generation Partner Project (3GPP) and the 3GPP2, the DIAMETER protocols have been regarded as a preferred AAA protocol for future communication networks, such as the Next Generation Network (NGN), the Wideband Code Division Multiple Access (WCDMA) and the Code Division Multiple Access (CDMA) 2000.

Since the appearance of the network, an authentication, authorization and accounting system has been a base for its operation. The use of various resources in the network need to be managed through authentication, authorization and accounting. For a business system, authentication is crucial. Only if the identity of a user is confirmed, an object charged for a provided service can be determined, while an illegal user (for example, a hacker) can be prevented from breaching the network. Upon confirmation of the identity of the user, the system can grant a corresponding authority to the client according to a category of a service applied for by a user in registration. Finally, a statistic for the occupancy of a system resource by the user is made via a relevant device during the use of the resource by the user, and hereby the client is charged for a corresponding fee.

In domain of Internet Protocol Multimedia Subsystem (IMS) of a 3rd Generation (3G) mobile network, multiple interfaces between entities, such as an interface between an Application Server (AS) and a Home Subscriber Server (HSS), i.e. an Sh interface, are enabled with the DIAMETER protocol. The HSS is required to transmit user data to the AS through the DIAMETER Protocol over the Sh interface. Because one user can subscribe for multiple services in the IMS network, such as a call service, a multimedia service, a data service and the like, and the user data is described in a format of Extensible Markup Language (XML) in 3G standards, the user data is of a significant amount, which tends to be beyond 10000 bytes. As mentioned above, the user data is a parameter of the DIAMETER protocol message, and thus the DIAMETER messages over the Sh interface also become extremely large. The transmission of the DIAMETER messages may occupy an excessive network bandwidth, and hence consume an excessive network resource.

Therefore, there is a need for a method for transmitting a message of the Authentication, Authorization and Accounting protocol for the purpose of saving the network bandwidth and reducing the consumption of the network resource when transmitting the DIAMETER message.

A Patent application No. US 2004/148505 A1 relates to a method and a system for expediting in at least one network the establishment of a secure tunnel which provides connection between user equipment (UE) and one network entity and authenticating the user equipment with another network entity. Further, an European Patent Application No. 1 411 699 relates to packet-by-packet data transmission among plural data processing apparatuses, in which data corresponding to predetermined packets are compressed at the transmitting end, and the compressed data corresponding to these packets are restored at the receiving end.

### Summary of the Invention

The present invention provides a method for transmitting a message of the Authentication, Authorization and Accounting protocol, it may reduce the network resource occupied by the transmission of the DIAMETER message.

According to an aspect of the invention, a method for transmitting a message of Authentication, Authorization and Accounting protocol includes: compressing, by a transmitting device, a DIAMETER message to be transmitted through a predetermined compression mode, and transmitting the compressed message; and decompressing, by a receiving device, the received DIAMETER message through a decompression mode corresponding to the predetermined compression mode.

Optionally, the method further includes: negotiating with the receiving device by the transmitting device about the compression mode prior to the transmitting the DIAMETER message, the negotiation about the compression mode being performed through a DIAMETER protocol message.

Optionally, the negotiation with the receiving device by the transmitting device about the compression mode includes: negotiating about an Attribute Value Pair (AVP) in the DIAMETER message required to be compressed; and/or negotiating about a compression algorithm used for the DIAMETER message required to be compressed.

Optionally, the negotiation about the compression algorithm used for the DIAMETER message required to be compressed includes: negotiating about compression algorithms used for respective AVPs; or negotiating about a compression algorithm commonly used for all AVP.

Optionally, the method further includes: setting a compression flag in the header of a compressed AVP during the compression of the DIAMETER message to be transmitted; and identifying, by the receiving device, that the AVP has been compressed according to the flag.

Optionally, the negotiation with the receiving device by the transmitting device about the compression mode includes: transmitting, by the transmitting device, to the receiving device a request of message compression negotiation to instruct the receiving device to select a message compression mode; determining the message compression mode upon receipt of the request of message compression negotiation and returning a response of message compression negotiation to the transmitting device by the receiving device; and storing the determined message compression mode by the transmitting device and the receiving device, respectively.

Optionally, the method further includes: returning a response of message compression failure to the transmitting device if the receiving device does not support the compression of the DIAMETER message or does not accept the request of message compression negotiation from the transmitting device.

Optionally, an AVP indicative of the message compression mode of the transmitting device is added in the DIAMETER message to be transmitted when the message is transmitted after compressed by the transmitting device; and the receiving device decompresses the received DIAMETER message according to the message compression mode indicated in the added AVP.

Optionally, the method further includes: returning a response of message compression failure to the transmitting device if the receiving device does not support the compression of the DIAMETER message or does not accept the message compression mode indicated in the added AVP.

Optionally, the method further includes: determining, at the receiving device and the transmitting device, a corresponding compression mode according to configuration of a device operator prior to transmission of the DIAMETER message.

Optionally, the configuration of the device operator includes: configuring for each transmitting device, at a device of the receiving device, the same message compression mode as the receiving device according to a name of the transmitting device, and configuring for each receiving device, at a device of the transmitting device, the same message compression mode as the transmitting device according to a name of the receiving device; or configuring the same message compression mode for the transmitting device and each corresponding receiving device, and configuring the same message compression mode for the receiving device and each corresponding transmitting device; or presetting the same default mode of the message compression mode for the receiving device or the transmitting device.

According to the present invention, the transmission of the DIAMETER message in a compression form is implemented. Prior to the transmission in the compression form, the transmitting device negotiates with the receiving device to adopt a compression mode acceptable by both sides, which ensures the receiving device decompresses successfully the received DIAMETER message. The size of the compressed DIAMETER protocol packet is reduced, which saves the network bandwidth and reduces the consumption of the network resources. Such method for transmitting the DIAMETER message supports all compression methods, which is easy to be implemented and saves cost and investment.

### Brief Descriptions of the Drawings

Figure 1 is a flow chart depicting compression transmission of a DIAMETER message according to an embodiment of the invention.
Figure 2 is a flow chart depicting the negotiation between a transmitting device and a receiving device about a compression mode for a DIAMETER message according to an embodiment of the invention.

### Detailed Descriptions of the Embodiments

The invention provides a method for transmitting a message of the Authentication, Authorization and Accounting protocol, in which a transmitting device negotiates with a receiving device about the compression mode for a DIAMETER message, and with the compression mode determined through the negotiation, the transmitting device compresses the DIAMETER message and the receiving device decompresses the received DIAMETER message. This way of transmitting the compressed DIAMETER message reduces the network resource occupied by the transmission of the DIAMETER message.

Firstly, the DIAMETER protocol will be described for facilitating the understanding of the transmission of a DIAMETER message. A format of a DIAMETER protocol message is as follows.

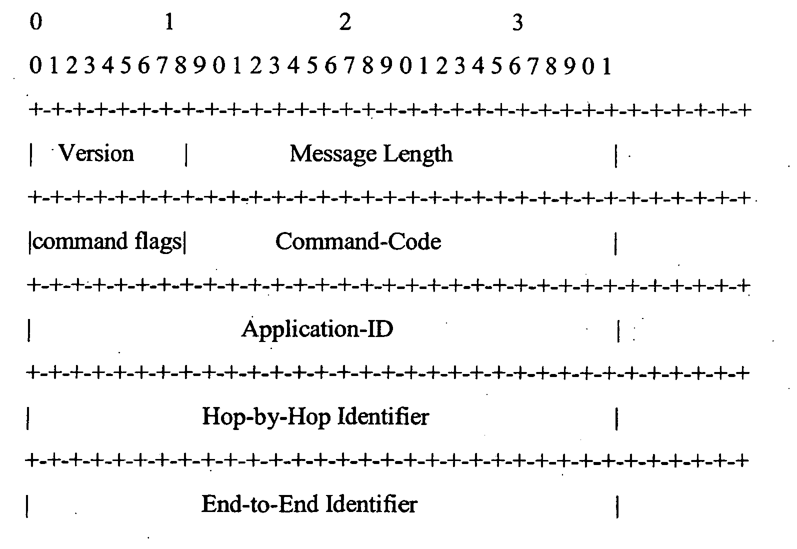

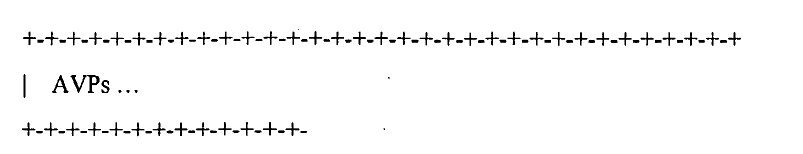

As can be seen from the above format, the DIAMETER protocol message consists of a DIAMETER message header and a DIAMETER message body. The DIAMETER message header includes Version, Message Length, command flags, Command-Code, Application-ID, Hop-by-Hop Identifier and End-to-End Identifier. The DIAMETER message body consists of multiple Attribute Value Pairs (AVPs), i.e. information units in the message.

The format of each AVP is as follows.

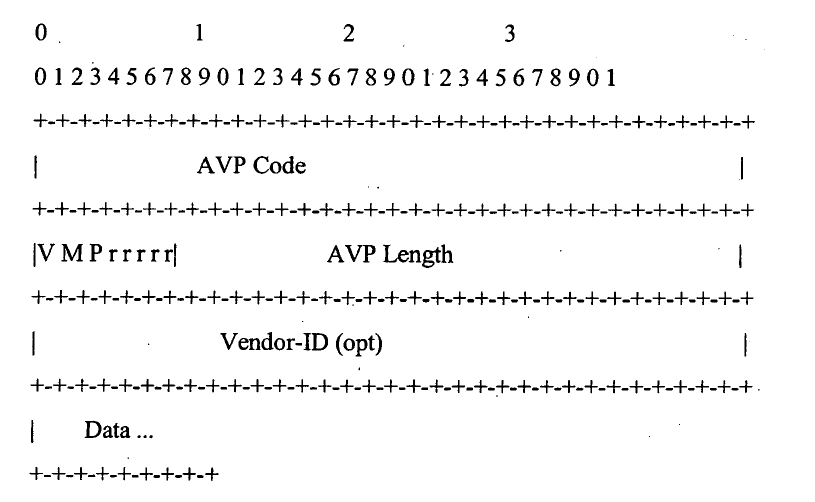

The AVP consists of an AVP header and Data. The AVP header includes AVP Code, AVP Flags, AVP Length and an optional Vendor-ID. The AVP Flags includes a flag V (a flag for the vendor), a flag M (a flag that is necessary), a flag P (a flag for encryption) and a flag r which is a reserved flag currently in no use.

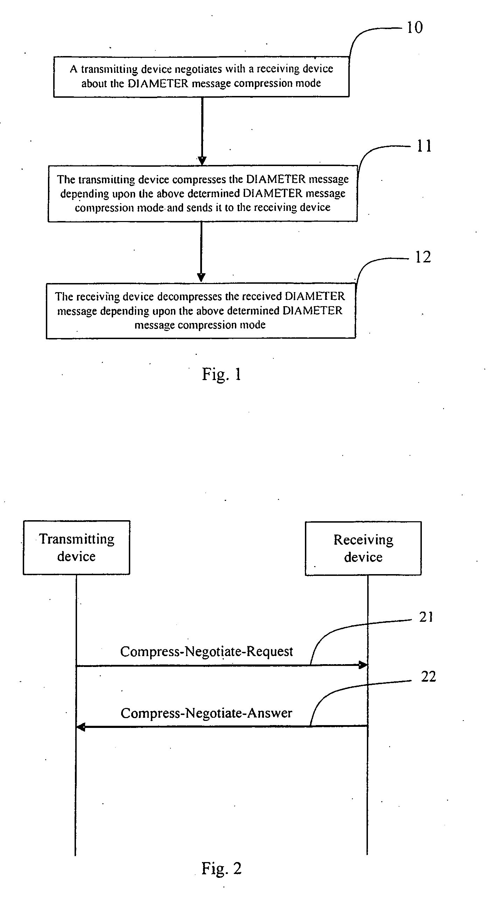

A procedure of the transmission of the DIAMETER protocol message is illustrated in Figure 1. The procedure of the transmission includes the following blocks.

In block 10, the transmitting device negotiates with the receiving device about a compression mode for the DIAMETER message.

When transmitting the DIAMETER message, if the DIAMETER message packet to be transmitted is large, the manner of transmission after compression can be adopted so as to reduce the consumption of the network resource. Prior to the compression transmission, the receiving device is required to be made clearly aware of which AVP data has been compressed and which compression algorithm is adopted by the transmitting device, in order to ensure the receiving device can successfully decompress the compressed message, i.e. the receiving device can identify the compression mode of the transmitting device. Therefore, the transmitting device firstly negotiates with the receiving device to determine the compression mode for the DIAMETER message prior to transmitting the DIAMETER message. The negotiation about the compression of the message may involve the following cases.

In a first case, the compression algorithm for use is negotiated about. An unused flag of the AVP flags that is reserved in the AVP header is used as a compression flag C. The format of the flags in the AVP header with this added flag is as follows.

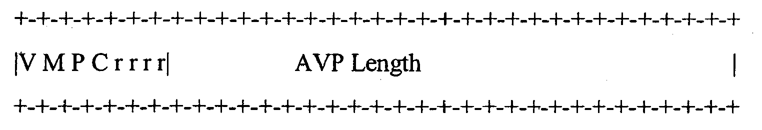

If the flag C is set as 1, it indicates that the data of the AVP has been compressed, and if the flag is set as 0, it indicates that the data of the AVP is not compressed.

In a second case, the content of the negotiation involves which AVPs need to be compressed and the compression algorithms to be used respectively for these AVPs. Different compression algorithms can be used for different AVPs. In this case, it is possible to identify through the negotiation that the data of which AVPs is compressed.

It can be determined from the above first and second cases that the negotiation content for the message compression involves which AVPs need to be compressed and the algorithms used for the compression. The negotiation content for message compression can also be referred to a message compression mode.

Methods for the negotiation for the DIAMETER message compression include the following methods.

In a first method, the receiving device and the transmitting device negotiate a consistency based upon a configuration of a device operator as the following description.

The way A of Configuration: the message compression mode of each transmitting device is configured at a device of the receiving device according to the name of the transmitting device; and also, the message compression mode of each receiving device is configured at a device of the transmitting device according to the name of the receiving device. The message compression modes configured at the receiving device and the transmitting device shall be identical.

The way B of Configuration: the same message compression mode is used for each receiving device, in other words, only one piece of message compression data is configured by the device of the transmitting device without distinguishing different receiving devices; and also, the same message compression mode is used for each device of the transmitting device, in other words, only one piece of message compression data is configured, at the device of the receiving device.

The way C of Configuration: the same default mode of the message compression mode is preset in implementing the receiving device or the transmitting device, and thus no configuration for the receiving device or the transmitting device is required to be done by the device operator.

In a second method, an AVP for indicating the message compression mode of the transmitting device is added to a compressed DIAMETER message at the transmitting device upon transmission of the message. According to message compression data AVP carried in the compressed message, the receiving device negotiates with the transmitting device and decompresses the received DIAMETER message.

In a third method, the transmitting device and the receiving device negotiate about the message compression mode through a DIAMETER protocol message as illustrated in Figure 2.

In block 21, the transmitting device firstly transmits a request of message compression negotiation to the receiving device to instruct the receiving device to select a message compression mode in which a plurality of compression algorithms can be used.

In block 22, upon receiving the request of message compression negotiation, the receiving device determines a message compression mode, in other words, selects a supported compression algorithm, and returns it to the transmitting device a response of message compression negotiation success including the determined message compression mode. If the receiving device does not support the DIAMETER message compression or the designated compression algorithm, it returns a response of message compression negotiation failure to the transmitting device, and the transmitting device transmits the uncompressed message to the receiving device.

Both the transmitting device and the receiving device respectively store the message compression mode. When transmitting a message, the transmitting device compresses the DIAMETER message according to the stored message compression mode determined by the receiving device, and transmits the compressed message to the receiving device. Also, the receiving device decompresses the received compressed message according to the stored DIAMETER message compression mode of the transmitting device.

Formats of the DIAMETER message for compression negotiation can adopt the following formats.

The request of compression negotiation can adopt the following format.

<CNR> ::= <Diameter Header: XXX, REQ>: a DIAMETER protocol header, which indicates that this message is a request message, in which XXX indicates a value of the command code assigned by the DIAMETER protocol standards organization;
{Origin-Host}: origin host information;
{Origin-Realm}: origin service domain information;
[Destion-Host]: destination host information;
{Destion-Realm}: destination service domain information;
{OverLoad-Cause}: overload cause;
{Compress-Info}: information data of negotiation for message compression.

The response of compression negotiation can adopt the following format.

<CNA> ::= <Diameter Header: XXX>: a DIAMETER protocol header, which indicates that this message is a response message, in which XXX indicates a value of the command code assigned by the DIAMETER protocol standards organization;
{Result-Code} : cause code indicative of an execution success or failure;
{Origin-Host} : origin host information;
{Origin-Realm}: origin service domain information;
{Compress-Info}: information data of determination for message compression;
[Error-Message]: error message descriptive of an error if there is an error in the request;
*[Failed-AVP]: failure attribute value pair. Error information is returned in the response if there is an error in the request.

The Compress-Info AVP can adopt the following format.

Compress-Info ::= <AVP Header: XXX>, in which XXX indicates a value of the AVP code assigned by the DIAMETER protocol standards organization;
* [AVP-Compress-Info]: indicative of the presence of the compression information of multiple AVPs;
* [Compress-Arithmetic]: indicating that there may be multiple compression algorithms.

The AVP-Compress-Info AVP can adopt the following format.

AVP-Compress-Info ::= <AVP Header: XXX>, in which XXX indicates a value of the AVP code assigned by the DIAMETER protocol standards organization;
{AVP-Code}: indicative of a value of the AVP code;
[Vendor-Id]: indicative of an identifier of the vendor. If it is present, it indicates that the AVP is defined by the vendor;
*[Compress-Arithmetic]: indicating that there may be multiple compression algorithms.

In block 11, the transmitting device selects at least one AVP in the message body of a DIAMETER message to be transmitted and compresses the data of the selected AVP according to the DIAMETER message compression mode determined through the negotiation with the receiving device, and sets a flag in the compressed AVP(s). The receiving device identifies that data of the compressed AVP(s) according to the flag.

The transmission of a DIAMETER message over the Sh interface is exemplified. The transmitting device can select and compress user data in the XML format. The user data in the XML format is the data of an AVP in the DIAMETER message. Because the data is very large and occupies a large part of the space of the length of the entire DIAMETER message; the data will be compressed to make the entire DIAMETER message smaller finally. The user data in the XML format can be compressed with an XML compression algorithm (the specific compression method is not limited in the invention). The compression ratio for XML is typically more than 80%. In other words, the size of the compressed user data in the XML format is one fifth of that of the uncompressed data. Thus, the compressed DIAMETER message has a significantly reduced size.

In block 12, after receiving the compressed DIAMETER message, the receiving device decompresses the data of AVPs whose data is compressed in the DIAMETER message body through the same compression algorithm according to the DIAMETER message compression mode determined by the negotiation with the transmitting device.

Further, with respect to the second method in block 10, if the receiving device doesn't support the message compression mode of the transmitting device, for instance, if the compression algorithm designated by the transmitting device is not supported, the receiving device returns a failure response without processing the compressed message.

To sum up, the invention implements that, when transmitting a DIAMETER message, the message is compressed and transmitted, and prior to transmission, the transmitting device negotiates with the receiving device about the compression mode. This ensures that the receiving device can enable successful decompression upon receipt of the compressed message. Such method for transmission of a DIAMETER message after compression saves the network bandwidth, reduces the consumption of the network resource, is easy to be implemented, and saves cost and investment.

The above descriptions are merely illustrative of the preferred embodiments of the invention. The scope of the invention shall not be limited to these. Variations or substitutions which will readily occur to those skilled in the art in light of the technical disclosure of the invention shall be encompassed in the scope of the invention. Accordingly, the scope of the invention shall be defined by the following claims.

## Claims

1. A method for transmitting a message of Authentication, Authorization and Accounting protocol, comprising::
compressing, by a transmitting device, data of an Attribute Value Pair, (AVP), to be compressed in a DIAMETER message to be transmitted in accordance with a determined message compression mode; and
transmitting, by the transmitting device, the compressed DIAMETER message,
wherein a flag which identifies that the data of the AVP is compressed is contained in the AVP in the DIAMETER message, the flag is used by a receiving device to identify that the data of the AVP is compressed,
**characterized in that** the message compression mode is determined with message compression negotiation between the transmitting device and the receiving device, and the message compression negotiation comprises negotiating about a compression algorithm to be used for the DIAMETER message.

2. The method according to claim 1, wherein the message compression negotiation comprises:
transmitting to the receiving device a request of message compression negotiation;
receiving a response, returned by the receiving device, of the message compression negotiation corresponding to the request, in which the message compression mode determined by the receiving device is contained; and
storing the determined message compression mode.

3. The method according to claim 2, wherein the determined message compression mode comprises:
compression algorithms that are used for respective AVPs in the DIAMETER message; or
a compression algorithm that is commonly used for all AVPs in the DIAMETER message; or
a compression algorithm that is used for an AVP with data to be compressed in the DIAMETER message.

4. The method according to claim 1, further comprising:
setting, in header of the AVP, the flag which identifies that the data of the AVP is compressed.

5. The method according to claim 1, further comprising:
adding into the compressed DIAMETER message, an AVP with information that indicates the message compression mode of the transmitting device, the information of the added AVP being used by the receiving device to perform decompression in accordance with the message compression mode in the added AVP.

6. The method according to claims 5, further comprising:
receiving a response, returned by the receiving device, of a message compression negotiation failure, which indicates that the receiving device does not support the compression of the DIAMETER message or does not accept the message compression mode indicated in the added AVP.

7. A method for transmitting a message of Authentication, Authorization and Accounting protocol, comprising:
receiving from a transmitting device, by a receiving device, a DIAMETER message in which a flag is contained, wherein the flag identifies that data of an AVP with the flag is compressed;
identifying the AVP with data being compressed in the DIAMETER message in accordance with the flag contained in the DIAMETER message; and
decompressing the data of the AVP in the DIAMETER message in accordance with a decompression mode corresponding to a determined message compression mode,
**characterized in that** the message compression mode is determined with message compression negotiation between the transmitting device and the receiving device, and the message compression negotiation comprises negotiating about a compression algorithm to be used for the DIAMETER message.

8. The method according to claim 7, wherein the message compression negotiation comprises:
receiving, by the receiving device, a request of message compression negotiation from a the transmitting device;
determining the message compression mode in accordance with information about the message compression negotiation contained in the request of message compression negotiation;
returning a response of the message compression negotiation success in which the determined message compression mode is contained; and
storing the determined message compression mode.

9. The method according to claim 7, wherein an AVP that indicates the message compression mode of the transmitting device is contained in the received DIAMETER message,
wherein decompressing the data of the AVP being determined in accordance with the decompression mode corresponding to the determined message compression mode comprises:
determining, by the receiving device, the message compression mode in accordance with the information about the message compression mode indicated in the AVP in the DIAMETER message;
and decompressing the received DIAMETER message in accordance with the decompression mode corresponding to the determined message compression mode.

10. The method according to claim 9, further comprising: when the receiving device does not support the compression of the DIAMETER message or does not accept the message compression mode indicated in the AVP, returning a response of message compression negotiation failure to the transmitting device.

11. A transmitting device, the device being configured to:
compress data of an Attribute Value Pair, AVP, to be compressed in a DIAMETER message to be transmitted in accordance with a determined message compression mode; and
transmit the compressed DIAMETER message,
wherein a flag which identifies that the data of the AVP is compressed is contained in the AVP in the DIAMETER message, the flag is used by a receiving device to identify that the data of the AVP is compressed,
**characterized in that** the message compression mode is determined with message compression negotiation between the transmitting device and the receiving device, and the message compression negotiation comprises negotiating about a compression algorithm to be used for the DIAMETER message.

12. A receiving device, the receiving device being configured to:
receive a DIAMETER message in which a flag is contained from a transmitting device, wherein the flag identifies that data of an AVP with the flag is compressed;
identify the AVP with data being compressed in the DIAMETER message in accordance with the flag contained in the DIAMETER message; and
decompress the data of the AVP in the DIAMETER message in accordance with a decompression mode corresponding to a determined message compression mode,
**characterized in that** the message compression mode is determined with message compression negotiation between the transmitting device and the receiving device, and the message compression negotiation comprises negotiating about a compression algorithm to be used for the DIAMETER message.

## Patentansprüche

1. Verfahren zum Senden einer Nachricht eines Authentifikations-, Autorisierungs- und Abrechnungs-Protokolls, umfassend:
durch eine sendende Vorrichtung Komprimieren eines Attribut-Werte-Paares (AVP), das in einer DIAMETER-Nachricht zu komprimieren ist, die gemäß einem bestimmten Nachrichten-Kompressions-Modus zu übertragen ist; und
durch die sendende Vorrichtung Senden der komprimierten DIAMETER-Nachricht,
wobei ein Flag, das kennzeichnet, dass die Daten des AVP komprimiert sind, im AVP in der DIAMETER-Nachricht enthalten ist, wobei das Flag von einer empfangenden Vorrichtung dazu benutzt wird, zu erkennen, dass die Daten des AVP komprimiert sind,
**dadurch gekennzeichnet, dass** der Nachrichten-Komprimierungs-Modus durch Verhandeln der Nachrichten-Komprimierung zwischen der sendenden Vorrichtung und der empfangenden Vorrichtung bestimmt wird, und dass das Verhandeln der Nachrichten-Komprimierung es umfasst, den Komprimierungs-Algorithmus auszuhandeln, der für die DIAMETER-Nachricht zu benutzen ist.

2. Verfahren gemäß Anspruch 1, wobei das Verhandeln der Nachrichten-Komprimierung umfasst:
Senden einer Anforderung einer Nachrichten-Komprimierungs-Verhandlung an die empfangende Vorrichtung;
Empfangen einer von der empfangenden Vorrichtung zurückgesendeten Antwort der der Anforderung entsprechenden Nachrichten-Komprimierungs-Verhandlung, in der der von der empfangenden Vorrichtung bestimmte Nachrichten-Komprimierungs-Modus enthalten ist; und
Speichern des bestimmten Nachrichten-Komprimierungs-Modus.

3. Verfahren gemäß Anspruch 2, wobei der bestimmte Nachrichten-Komprimierungs-Modus umfasst:
Komprimierungs-Algorithmen, die für entsprechende AVPs in der DIAMETER-Nachricht benutzt werden; oder
einen Komprimierungs-Algorithmus, der gemeinsam für alle AVPs in der DIAMETER-Nachricht benutzt wird; oder
einen Komprimierungs-Algorithmus, der für ein AVP mit zu komprimierenden Daten in der DIAMETER-Nachricht benutzt wird.

4. Verfahren gemäß Anspruch 1, ferner umfassend:
in der Kopfinformation des AVP Einstellen des Flags, das kennzeichnet, dass die Daten des AVP komprimiert sind.

5. Verfahren gemäß Anspruch 1, ferner umfassend:
in der komprimierten DIAMETER-Nachricht Hinzufügen eines AVP mit Informationen, die den Nachrichten-Komprimierungs-Modus der sendenden Vorrichtung anzeigen, wobei die Informationen des hinzugefügten AVP von der empfangenden Vorrichtung dazu benutzt werden, die Dekomprimierung entsprechend dem Nachrichten-Komprimierungs-Modus im hinzugefügten AVP durchzuführen.

6. Verfahren gemäß Anspruch 5, ferner umfassend:
Empfangen einer von der empfangenden Vorrichtung zurückgesendeten Antwort über einen Fehler beim Verhandeln der Nachrichten-Komprimierung, die anzeigt, dass die empfangende Vorrichtung die Komprimierung der DIAMETER-Nachricht nicht unterstützt oder den vom hinzugefügten AVP angezeigten Nachrichten-Komprimierungs-Modus nicht akzeptiert.

7. Verfahren zum Senden einer Nachricht eines Authentifikations-, Autorisierungs- und Abrechnungs-Protokolls, umfassend:
von einer sendenden Vorrichtung durch eine empfangende Vorrichtung Empfangen einer DIAMETER-Nachricht, in der ein Flag enthalten ist, wobei das Flag anzeigt, dass Daten eines AVP mit dem Flag komprimiert sind;
Erkennen des AVP mit Daten, die in der DIAMETER-Nachricht entsprechend dem in der DIAMETER-Nachricht enthaltenen Flag komprimiert sind; und
Dekomprimieren der Daten des AVP in der DIAMETER-Nachricht entsprechend einem Dekomprimierungs-Modus, der einem bestimmten Nachrichten-Komprimierungs-Modus entspricht,
**dadurch gekennzeichnet, dass** der Nachrichten-Komprimierungs-Modus durch Verhandeln der Nachrichten-Komprimierung zwischen der sendenden Vorrichtung und der empfangenden Vorrichtung bestimmt wird, und das Verhandeln der Nachrichten-Komprimierung ein Verhandeln über einen Komprimierungs-Algorithmus umfasst, der für die DIAMETER-Nachricht zu benutzen ist.

8. Verfahren gemäß Anspruch 7, wobei das Verhandeln der Nachrichten-Komprimierung umfasst:
durch die empfangende Vorrichtung Empfangen einer Anforderung einer Nachrichten-Komprimierungs-Verhandlung von der sendenden Vorrichtung;
Bestimmen des Nachrichten-Komprimierungs-Modus entsprechend Informationen über die Verhandlung der Nachrichten-Komprimierung, die in der Anforderung einer Nachrichten-Komprimierungs-Verhandlung enthalten sind;
Zurücksenden einer Antwort über den Erfolg der Verhandlung der Nachrichten-Komprimierung, in der der bestimmte Nachrichten-Komprimierungs-Modus enthalten ist; und
Speichern des bestimmten Nachrichten-Komprimierungs-Modus.

9. Verfahren gemäß Anspruch 7, wobei ein AVP, das den Nachrichten-Komprimierungs-Modus der sendenden Vorrichtung anzeigt, in der empfangenen DIAMETER-Nachricht enthalten ist,
wobei die Dekomprimierung der Daten des AVP, die entsprechend dem Dekomprimierungs-Modus, der dem bestimmten Nachrichten-Komprimierungs-Modus entspricht, bestimmt wird, umfasst:
durch die empfangende Vorrichtung Bestimmen des Nachrichten-Komprimierungs-Modus entsprechend der Information über den Nachrichten-Komprimierungs-Modus, die in dem AVP in der DIAMETER-Nachricht angezeigt wird;
und Dekomprimieren der empfangenen DIAMETER-Nachricht entsprechend dem Dekomprimierungs-Modus, der dem bestimmten Nachrichten-Komprimierungs-Modus entspricht.

10. Verfahren gemäß Anspruch 9, ferner umfassend: Wenn die empfangende Vorrichtung die Komprimierung der DIAMETER-Nachricht nicht unterstützt oder den im AVP angezeigten Nachrichten-Komprimierungs-Modus nicht akzeptiert, Zurücksenden einer Antwort über einen Fehler beim Verhandeln der Nachrichten-Komprimierung an die sendende Vorrichtung.

11. Sendende Vorrichtung, wobei die Vorrichtung konfiguriert ist:
Daten eines Attribut-Wert-Paares (Attribute Value Pair, AVP), das in einer DIAMETER-Nachricht zu komprimieren ist, die gemäß einem bestimmten Nachrichten-Kompressions-Modus zu übertragen ist, zu komprimieren; und
die komprimierte DIAMETER-Nachricht zu senden,
wobei ein Flag, das kennzeichnet, dass die Daten des AVP komprimiert sind, im AVP in der DIAMETER-Nachricht enthalten ist, wobei das Flag von einer empfangenden Vorrichtung dazu benutzt wird, zu erkennen, dass die Daten des AVP komprimiert sind,
**dadurch gekennzeichnet, dass** der Nachrichten-Komprimierungs-Modus durch Verhandeln der Nachrichten-Komprimierung zwischen der sendenden Vorrichtung und der empfangenden Vorrichtung bestimmt wird, und dass das Verhandeln der Nachrichten-Komprimierung es umfasst, den Komprimierungs-Algorithmus auszuhandeln, der für die DIAMETER-Nachricht zu benutzen ist.

12. Empfangende Vorrichtung, wobei die empfangende Vorrichtung konfiguriert ist:
eine DIAMETER-Nachricht von einer sendenden Vorrichtung zu empfangen, in der ein Flag enthalten ist, wobei das Flag kennzeichnet, dass die Daten eines AVP mit dem Flag komprimiert sind;
das AVP mit Daten, die in der DIAMETER-Nachricht entsprechend dem in der DIAMETER-Nachricht enthaltenen Flag komprimiert sind, zu erkennen; und
die Daten des AVP in der DIAMETER-Nachricht entsprechend einem Dekomprimierungs-Modus, der einem bestimmten Nachrichten-Komprimierungs-Modus entspricht, zu dekomprimieren,
**dadurch gekennzeichnet, dass** der Nachrichten-Komprimierungs-Modus durch Verhandeln der Nachrichten-Komprimierung zwischen der sendenden Vorrichtung und der empfangenden Vorrichtung bestimmt wird, und dass das Verhandeln der Nachrichten-Komprimierung es umfasst, den Komprimierungs-Algorithmus auszuhandeln, der für die DIAMETER-Nachricht zu benutzen ist.

## Revendications

1. Procédé pour transmettre un message de protocole d'authentification, d'autorisation et de comptabilité, comprenant :
la compression, par un dispositif transmetteur, de données d'une paire attribut-valeur (AVP) devant être compressées dans un message DIAMETER devant être transmis conformément à un mode de compression de message déterminé ; et
la transmission, par le dispositif transmetteur, du message DIAMETER compressé,
dans lequel un drapeau qui identifie que les données de l'AVP sont compressées est contenu dans l'AVP dans le message DIAMETER, le drapeau est utilisé par un dispositif récepteur pour identifier que les données de l'AVP sont compressées,
**caractérisé en ce que** le mode de compression de message est déterminé avec une négociation de compression de message entre le dispositif transmetteur et le dispositif récepteur, et la négociation de compression de message comprend la négociation concernant un algorithme de compression devant être utilisé pour le message DIAMETER.

2. Procédé selon la revendication 1, dans lequel la négociation de compression de message comprend :
la transmission au dispositif récepteur d'une demande de négociation de compression de message ;
la réception d'une réponse, renvoyée par le dispositif récepteur, de la négociation de compression de message correspondant à la demande, dans laquelle le mode de compression de message déterminé par le dispositif récepteur est contenu ; et
le stockage du mode de compression de message déterminé.

3. Procédé selon la revendication 2, dans lequel le mode de compression de message déterminé comprend :
des algorithmes de compression qui sont utilisés pour des AVP respectives dans le message DIAMETER ; ou
un algorithme de compression qui est communément utilisé pour toutes les AVP dans le message DIAMETER ; ou
un algorithme de compression qui est utilisé pour une AVP avec des données devant être compressées dans le message DIAMETER.

4. Procédé selon la revendication 1, comprenant en outre :
l'établissement, dans l'en-tête de l'AVP, du drapeau qui identifie que les données de l'AVP sont compressées.

5. Procédé selon la revendication 1, comprenant en outre :
l'ajout dans le message DIAMETER compressé, d'une AVP avec des informations qui indiquent le mode de compression de message du dispositif transmetteur, les informations de l'AVP ajoutée étant utilisées par le dispositif récepteur pour effectuer la décompression conformément au mode de compression de message dans l'AVP ajoutée.

6. Procédé selon la revendication 5, comprenant en outre :
la réception d'une réponse, renvoyée par le dispositif récepteur, d'un échec de la négociation de compression de message, qui indique que le dispositif récepteur ne supporte pas la compression du message DIAMETER ou n'accepte pas le mode de compression de message indiqué dans l'AVP ajoutée.

7. Procédé pour transmettre un message de protocole d'authentification, d'autorisation et de comptabilité, comprenant :
la réception en provenance d'un dispositif transmetteur, par un dispositif récepteur, d'un message DIAMETER dans lequel un drapeau est contenu, dans lequel le drapeau identifie que les données d'une AVP avec le drapeau sont compressées ;
l'identification de l'AVP avec les données qui sont compressées dans le message DIAMETER conformément au drapeau contenu dans le message DIAMETER ; et
la décompression des données de l'AVP dans le message DIAMETER conformément à un mode de décompression correspondant à un mode de compression de message déterminé,
**caractérisé en ce que** le mode de compression de message est déterminé avec une négociation de compression de message entre le dispositif transmetteur et le dispositif récepteur, et la négociation de compression de message comprend la négociation concernant un algorithme de compression devant être utilisé pour le message DIAMETER.

8. Procédé selon la revendication 7, dans lequel la négociation de compression de message comprend :
la réception, par le dispositif récepteur, d'une demande de négociation de compression de message en provenance du dispositif transmetteur ;
la détermination du mode de compression de message conformément à des informations concernant la négociation de compression de message contenues.dans la demande de négociation de compression de message ;
le renvoi d'une réponse de la réussite de la négociation de compression de message dans laquelle le mode de compression de message déterminé est contenu ; et
le stockage du mode de compression de message déterminé.

9. Procédé selon la revendication 7, dans lequel une AVP qui indique le mode de compression de message du dispositif transmetteur est contenue dans le message DIAMETER reçu,
dans lequel la décompression des données de l'AVP qui sont déterminées conformément au mode de décompression correspondant au mode de compression de message déterminé comprend :
la détermination, par le dispositif récepteur, du mode de compression de message conformément aux informations concernant le mode de compression de message indiqué dans l'AVP dans le message DIAMETER ;
et la décompression du message DIAMETER reçu conformément au mode de décompression correspondant au mode de compression de message déterminé.

10. Procédé selon la revendication 9, comprenant en outre : lorsque le dispositif récepteur ne supporte pas la compression du message DIAMETER ou n'accepte pas le mode de compression de message indiqué dans l'AVP, renvoyer une réponse d'échec de la négociation de compression de message au dispositif transmetteur.

11. Dispositif transmetteur, le dispositif étant configuré pour :
compresser des données d'une paire attribut-valeur (AVP), devant être compressées dans un message DIAMETER devant être transmis conformément à un mode de compression de message déterminé ; et
transmettre le message DIAMETER compressé,
dans lequel un drapeau qui identifie que les données de l'AVP sont compressées est contenu dans l'AVP dans le message DIAMETER, le drapeau est utilisé par un dispositif récepteur pour identifier que les données de l'AVP sont compressées,
**caractérisé en ce que** le mode de compression de message est déterminé avec une négociation de compression de message entre le dispositif transmetteur et le dispositif récepteur, et la négociation de compression de message comprend la négociation concernant un algorithme de compression devant être utilisé pour le message DIAMETER.

12. Dispositif récepteur, le dispositif récepteur étant configuré pour :
recevoir un message DIAMETER dans lequel un drapeau est contenu en provenance d'un dispositif transmetteur, où le drapeau identifie que les données d'une AVP avec le drapeau sont compressées ;
identifier l'AVP avec les données qui sont compressées dans le message DIAMETER conformément au drapeau contenu dans le message DIAMETER ; et
décompresser les données de l'AVP dans le message DIAMETER conformément à un mode de décompression correspondant à un mode de compression de message déterminé,
**caractérisé en ce que** le mode de compression de message est déterminé avec une négociation de compression de message entre le dispositif transmetteur et le dispositif récepteur, et la négociation de compression de message comprend la négociation concernant un algorithme de compression devant être utilisé pour le message DIAMETER.
